# EUROPÄISCHE PATENTSCHRIFT

(11) **EP 1 110 010 B1**
(45) Veröffentlichungstag und Bekanntmachung des Hinweises auf die Patenterteilung: **30.06.2004**
(21) Anmeldenummer: 00952864.7
(22) Anmeldetag: 23.06.2000
(51) Int. Cl.: F16F 9/05

(54) **LUFTFEDERANORDNUNG**
PNEUMATIC SPRING SYSTEM
DISPOSITIF D'AMORTISSEMENT PNEUMATIQUE

(30) Priorität: 07.07.1999 DE 19931198
(43) Veröffentlichungstag der Anmeldung: 27.06.2001
(73) Patentinhaber: Phoenix AG, 21079 Hamburg (DE)
(72) Erfinder: NEMETH, Jozsef, H-4400 Nyiregyháza (HU); HARSANYI, Zsolt, H-4400 Nyiregyháza (HU); KRISTON, Zoltán, H-4320 Nagykállo (HU); SZASZ, Attila, H-1112 Budapest (HU); KIGLICS, Gábor, H-1132 Budapest (HU)
(86) Internationale Anmeldenummer: PCT/DE2000/002035
(87) Internationale Veröffentlichungsnummer: WO 2001/004509

(56) Entgegenhaltungen:
- EP-A- 0 501 043
- EP-A- 0 864 453
- DE-A- 4 213 676
- DE-U- 29 510 199

## Beschreibung

Die Erfindung betrifft eine Luftfederanordnung, bestehend aus wenigstens folgenden Bauteilen, nämlich:
- einem Luftfederdeckel und Luftfederbalg;
- einem Luftfederkolben, der insbesondere aus Kunststoff oder Aluminium besteht, umfassend eine Stirnfläche, die dem Luftfederdeckel gegenüberliegend angeordnet ist; eine seitliche Abrollfläche für den Luftfederbalg und eine Basisfläche, die so gestaltet ist, daß ein Mehrkammersystem in das Innere des Luftfederkolbens hineinragt;
- einem ersten Befestigungssystem, das innerhalb der Basisfläche des Luftfederkolbens angeordnet ist; sowie
- einem Federträger, insbesondere einem Längslenker, mit dem die Basisfläche des Luftfederkolbens mittels des ersten Befestigungssystems sowie eines zusätzlichen zweiten Befestigungssystems verankert ist.

Eine gattungsgemäße Luftfderanordnung ist beispielsweise in der Druckschrift EP 0 864 453 A1 beschrieben, die sämtliche Merkmale des Oberbegriffs des Anspruchs 1 zeigt.

Der Luftfederkolben, der auch als Abrollkolben oder Tauchkolben bezeichnet wird, besteht aus Stahl, Kunststoff oder Aluminium, wobei die beiden zuletzt genannten Werkstoffe wegen ihres geringeren Gewichtes gegenüber Stahl zunehmend an Bedeutung gewinnen. Ferner umfaßt das Mehrkammersystem des Luftfederkolbens einzelne sich über den gesamten Umfang der Basisfläche erstreckende Ringkammersegmente, die innerhalb des Randbereiches der Basisfläche unter Bildung eines ringförmigen Außenrandes und Innenrandes verlaufen, und eine oder mehrere durch Stege begrenzte Kernkammer/n, die innerhalb des Innenrandes der Ringkammer angeordnet ist/sind. Außerdem besitzt der Luftfederkolben zumeist im Bereich seiner Basisfläche unter Bildung einer Verbreiterung den größten Durchmesser.

Die bisher bekannten Luftfederkolben sind häufig konstruiert, daß diese bei einem zentralen Stützkörper mehrere Spiegelebenen aufweisen. Auch rotationssymmetrische Luftfederkolben in bezug auf die Kolbenmittenachse sind bekannt (EP 0 501 043 A1).

In der Druckschrift EP 0 864 453 A1 wird ebenfalls ein Luftfederkolben mit zentralem Stützkörper beschrieben, wobei von diesem Stützkörper radial nach außen und im gleichen Abstand mehrere Stege verlaufen, die mit dem ringförmigen Außenrand verbunden sind. Im Gegensatz zu dem Luftfederkolben gemäß EP 0 501 043 A1 weist dieser jedoch maximal nur eine Spiegelebene auf, da das erste Befestigungssystem innerhalb der Basisfläche eine asymmetrische Konstellation besitzt, und zwar in bezug auf die Kolbenmittenachse. Auf diese Weise wird eine exzentrische Auflagefläche des Luftfederkolbens ausgebildet.

Hinsichtlich der Belastung des Luftfederkolbens gibt es nun zwei Varianten.
- Der Luftfederkolben wird zentrisch belastet.
- Der Luftfederkolben wird exzentrisch belastet (Off-Load-Belastung), was insbesondere bei einem Längslenker als Federträger der Fall ist.

Die Aufgabe der Erfindung besteht nun darin, eine gattungsgemäße Luftfederanordnung bereitzustellen, bei der der Luftfederkolben unter Verzicht auf eine Halteplatte bei gleichzeitiger Gewichtsreduzierung exzentrisch belastbar ist.

Gelöst wird diese Aufgabe gemäß Kennzeichen des Patentanspruches 1 dadurch, daß
- der Luftfederkolben im unmittelbaren Bereich der Kolbenmittenachse frei von einem zentralen Stützkörper ist;
- die Basisfläche des Luftfederkolbens einen durchgehenden und geradeverlaufenden Hauptsteg aufweist, der mit dem ringförmigen Außenrand verbunden ist und dabei im mittigen Bereich der Basisfläche, jedoch nicht durch die Kolbenmittenachse, verläuft; sowie
- der Hauptsteg parallel zur Längsaußenkante des Federträgers verläuft, und zwar derart, daß sich der Hauptsteg innerhalb der Auflagefläche des Luftfederkolbens befindet, und zwar bei fluchtender Kantenanordnung von Hauptsteg und Federträger.

Vorteilhafte Gestaltungsvarianten der erfindungsgemäßen Luftfederanordnung sind in den Patentansprüchen 2 bis 23 genannt.

Die Erfindung wird nun anhand von Ausführungsbeispielen unter Bezugnahme auf fünf Zeichnungen erläutert. Es zeigen:
- Fig. 1, 2: zwei besonders vorteilhafte Konstruktionsvarianten des Mehrkammersystems;
- Fig. 3: ein Luftfederkolben aus Kunststoff mit einer Metalleinlage im Zusammenwirken mit einem Federträger;
- Fig. 4, 5: zwei verschiedene Ansichten einer Metalleinlage, bestehend aus einem Gewindeteil und einer Verstärkungsrippe.

In Verbindung mit diesen Figuren gilt folgende Bezugszeichenliste:
- **1, 1', 1"**: Luftfederkolben
- **2, 2', 2"**: Basisfläche des Luftfederkolbens
- **3, 3', 3"**: Stirnfläche des Luftfederkolbens
- **4, 4', 4"**: Abrollfläche des Luftfederkolbens
- **5, 5', 5"**: Ringkammersegment
- **6, 6', 6"**: ringförmiger Außenrand
- **7, 7', 7"**: ringförmiger Innenrand
- **8, 8', 8"**: Kernkammern
- **9, 9'**: Hauptsteg
- **10, 10'**: Befestigungssteg
- **11,11', 11"**: erstes Befestigungssystem
- **12**: Außensteg (senkrecht zum Hauptsteg)
- **13**: Innensteg (senkrecht zum Hauptsteg)
- **14**: Quersteg (parallel zum Hauptsteg)
- **15**: Außensteg (schräg zum Hauptsteg)
- **16**: Innensteg (schräg zum Hauptsteg)
- **17**: Kopfkammer
- **18**: Steg (bogenförmig)
- **19**: Federarm (Längslenker)
- **20**: Auflagefläche
- **21**: Bohrung im Federarm
- **22**: Längsaußenkante des Federarms
- **23**: Gewindeteil der Metalleinlage
- **24**: Verstärkungsrippe der Metalleinlage
- **25**: Bohrungen innerhalb der Verstärkungsrippe
- **A, B, C, D**: Ringkammersegmente
- **H**: Gesamthöhe des Luftfederkolbens
- **S**: Kolbenmittenachse
- **X**: Spiegelebene

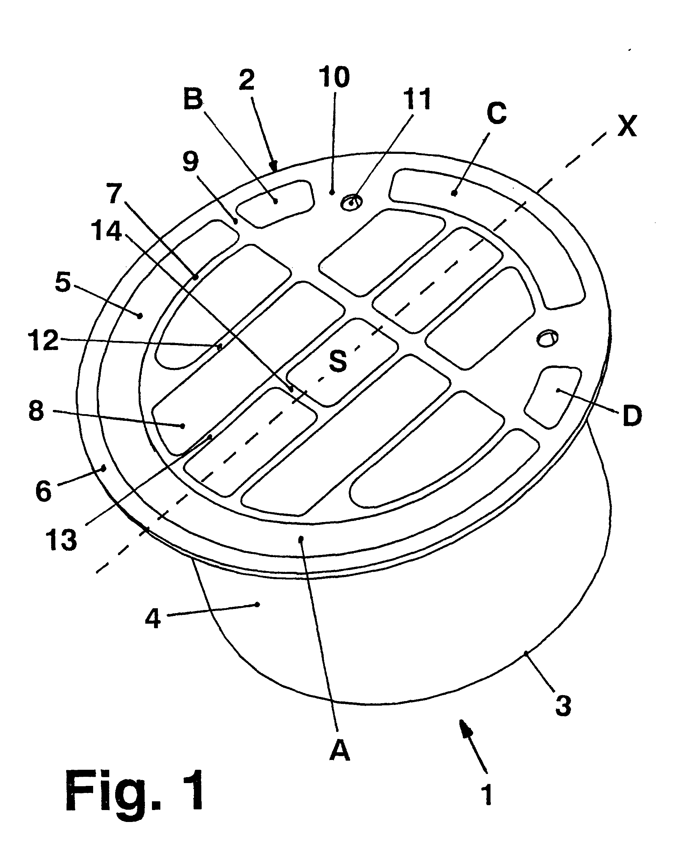

Fig. 1 zeigt einen Luftfederkolben **1** mit der Basisfläche **2**, Stirnfläche **3**, die dem Luftfederdeckel gegenüberliegend angeordnet ist, sowie mit der seitlichen Abrollfläche **4**, an der der Luftfederbalg abrollen kann. Im Bereich seiner Basisfläche **2** besitzt der Luftfederkolben unter Bildung einer Verbreiterung seinen größten Durchmesser. Außerdem ist die Basisfläche **2** so gestaltet, daß ein Mehrkammersystem in das Innere des Luftfederkolbens hineinragt.

Das Mehrkammersystem umfaßt einzelne Ringkammersegmente **5**, die innerhalb des Randbereiches der Basisfläche **2** unter Bildung eines ringförmigen Außenrandes **6** und Innenrandes **7** angeordnet sind. Außerdem sind mehrere durch Stege begrenzte Kernkammern **8** vorhanden, die innerhalb des Innenrandes **7** auftreten.

Die Basisfläche **2** des Luftfederkolbens weist einen durchgehenden und gerade verlaufenden Hauptsteg **9** auf, der mit dem Außenrand **6** verbunden ist und im mittigen Bereich der Basisfläche, jedoch nicht durch die Kolbenmittenachse **S,** verläuft. Im unmittelbaren Bereich der Kolbenmittenachse **S** ist kein zentraler Stützkörper vorhanden.

Die Basisfläche **2** des Luftfederkolbens weist ferner zwei Befestigungsstege **10** ausreichender Flächengröße für die Aufnahme des ersten Befestigungssystems **11** auf. Die beiden Befestigungsstege verbinden dabei jeweils den Außenrand **6** und Innenrand **7** der Ringkammersegmente **5**, und zwar bei Einbezug des Hauptsteges **9** unter Ausbildung von vier Ringkammersegmenten **A, B, C** und **D**.

Der Hauptsteg **9** ist wiederum mit einem System von vier Stegen verbunden, die senkrecht zum Hauptsteg verlaufen, und zwar unter Bildung von zwei Außenstegen **12** und zwei Innenstegen **13**. Dabei sind diese Stege in etwa gleichem Abstand zueinander angeordnet und verlaufen ausschließlich von Innenrand **7** zu Innenrand der Ringkammersegmente **5**. Die beiden Außenstege **12** sowie der Hauptsteg **9** gehen dabei jeweils breitflächig in den Befestigungssteg **10** über. Ferner sind die beiden Innenstege **13** durch einen Quersteg **14,** der parallel zum Hauptsteg **10** verläuft, verbunden, und zwar unter Einkammerung der Kolbenmittenachse **S**.

Der Luftfederkolben **1** ist so konstruiert, daß senkrecht zur Basisfläche **2** eine einzige Spiegelebene **X** vorhanden ist.

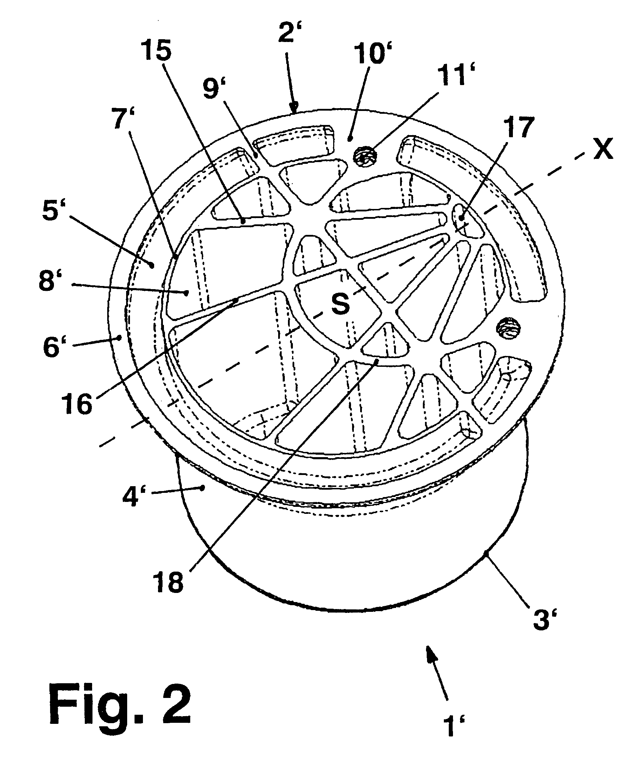

Der Luftfederkolben **1'** gemäß Fig. 2 unterscheidet sich gegenüber dem Luftfederkolben **1** gemäß Fig. 1 durch eine andere Ausbildung der Kernkammern **8**'.

Insgesamt vier Stege, nämlich zwei Außenstege **15** und zwei Innenstege **16,** verlaufen innerhalb des Innenrandes **7**' der einzelnen Ringkammersegmente **5**' schräg zum Hauptsteg **9',** und zwar unter Bildung eines fächerförmigen Gebildes. Diese vier fächerförmig verlaufenden Stege laufen dabei im Bereich des Innenrandes **7**' der Ringkammersegmente **5'** in Form eines gemeinsamen Treffpunktes zusammen, wobei innerhalb dieses Treffpunktes eine Kopfkammer **17** vorhanden ist, die nach außen durch den Innenrand **7'** der Ringkammersegmente **5**' begrenzt ist. Diese Kopfkammer liegt etwa auf halben Weg zwischen den beiden Befestigungsstegen **10'.**

Ferner sind die fächerförmig verlaufenden Stege durch einen bogenförmig verlaufenden Steg **18** miteinander verbunden. Dieser Steg verläuft dabei von Befestigungssteg **10'** zu Befestigungssteg. Im Bereich der beiden Außenstege **15** verläuft der bogenförmige Steg **18** zudem durch den Hauptsteg **9**', und zwar unter Bildung von insgesamt zwei Kreuzungsflächen.

Auch dieser Luftfederkolben **1**' ist so konstruiert, daß senkrecht zur Basisfläche **2"** eine einzige Spiegelebene **X** vorhanden ist. Außerdem ist auch hier im unmittelbaren Bereich der Kolbenmittenachse **S** kein zentraler Stützkörper vorhanden.

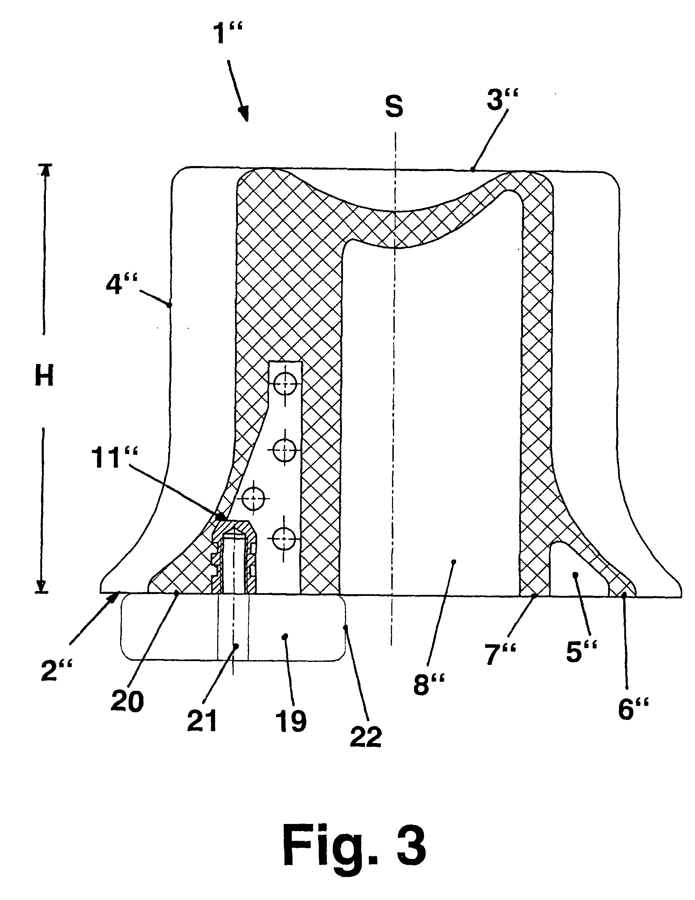

Fig. 3 zeigt einen Luftfederkolben **1"** aus Kunststoff, insbesondere aus glasfaserverstärktem Kunststoff, der bei direktem Kontakt auf dem Federträger **19**, der auch als Schwungarm bezeichnet wird, aufsitzt. Dabei bildet sich in bezug auf die Kolbenmittenachse **S** eine exzentrische Auflagefläche **20** als Teil der Basisfläche **2"**. Diese Auflagefläche ist zugleich die Befestigungsfläche, da sich innerhalb dieser Fläche das erste Befestigungssystem **11"** befindet, das über eine Bohrung **21** im Federarm **19** mit einem zweiten Befestigungssystem (z.B. Schraube) fest verbunden ist.

Der Hauptsteg **9** (Fig. 1) bzw. **9'** (Fig. 2) verläuft parallel zur Längsaußenkante **22** des Federträgers **19,** und zwar derart, daß sich der Hauptsteg innerhalb der Auflagefläche **20** des Luftfederkolbens **1"** befindet, und zwar bei fluchtender Kantenanordnung von Hauptsteg und Federträger.

Die Tiefe der Kernkammern **8"** beträgt wenigstens 2/3 der Gesamthöhe **H** des Luftfederkolbens **1".**

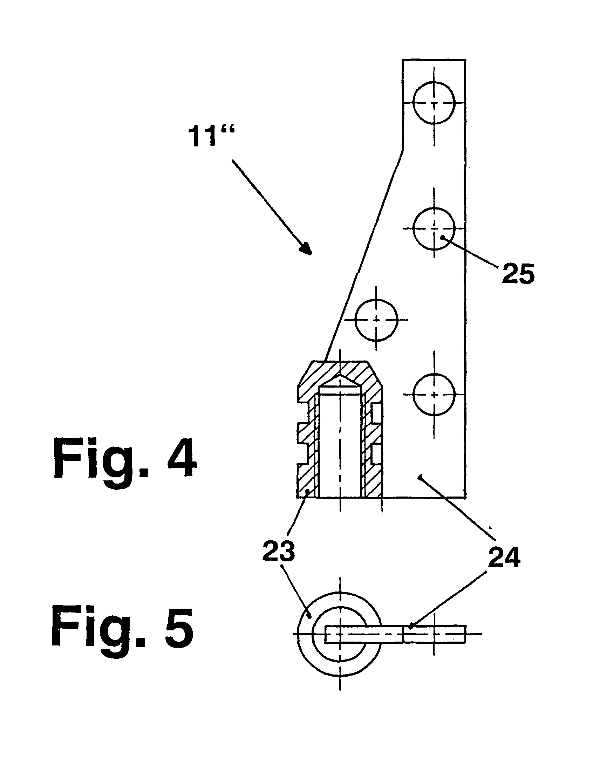

Die Fig. 4 und 5 zeigen nochmals Details des ersten Befestigungssystems **11"** gemäß Fig. 3, und zwar aus zwei verschiedenen Blickwinkeln.

Das erste Befestigungssystem **11"** ist hier eine Metalleinlage, die wiederum aus einem Gewindeteil **23** und einer Verstärkungsrippe **24** besteht. Die Verstärkungsrippe weist ferner mehrere horizontal verlaufende Bohrungen **25** auf.

Das Befestigungssystem **11"** ist insbesondere für einen Luftfederkolben aus Kunststoff geeignet, wobei der Kunststoff stoffschlüssig durch die Bohrungen **25** verläuft. Auch Halterippen anstelle dieser Bohrungen sind möglich.

Das Befestigungssystem **11"** hat den Vorteil, daß die Spannung in der Umgebung des Gewindeteils **23** verringert wird. Außerdem sorgt die Verstärkungsrippe **24** für eine Verringerung der Verformung des Kolbens, was bei Verwendung des Werkstoffes Kunststoff von Bedeutung ist. Dies sichert eine lange Lebensdauer der Luftfederanordnung.

Als erstes Befestigungssystem können gegebenenfalls auch einfache Gewindebohrungen oder Gewindebuchsen für die Aufnahme des zweiten Befestigungssystems verwendet werden, insbesondere bei Einsatz eines Luftfederkolbens aus metallischen Werkstoffen.

## Patentansprüche

1. Luftfederanordnung, bestehend aus wenigstens folgenden Bauteilen, nämlich:
- einem Luftfederdeckel;
- einem Luftfederkolben (1,1', 1"), der insbesondere aus Kunststoff oder Aluminium besteht, umfassend
• eine Stirnfläche (3, 3', 3"), die dem Luftfederdeckel gegenüberliegend angeordnet ist;
• eine seitliche Abrollfläche (4, 4', 4") und
• eine Basisfläche (2, 2', 2"), die so gestaltet ist, daß ein Mehrkammersystem in das Innere des Luftfederkolbens hineinragt, wobei das Mehrkammersystem einzelne sich über den gesamten Umfang der Basisfläche erstreckende Ringkammersegmente (5, 5', 5", A, B, C, D), die innerhalb des Randbereiches der Basisfläche unter Bildung eines ringförmigen Außenrandes (6, 6', 6") und Innenrandes (7, 7', 7") verlaufen, und eine oder mehrere durch Stege begrenzte Kernkammer/n (8, 8', 8"), die innerhalb des Innenrandes der Ringkammersegmente angeordnet ist/sind, umfaßt;
- einem Luftfederbalg aus elastomerem Werkstoff, der den Luftfederdeckel und Luftfederkolben (1, 1', 1") unter Verwendung von Befestigungsmitteln miteinander verbindet und insbesondere mit einem eingebetteten Festigkeitsträger versehen ist, wobei der Luftfederbalg unter Bildung eines volumenelastischen Luftfederinnenraumes an der Abrollfläche (4, 4', 4") des Luftfederkolbens abrollen kann;
- einem ersten Befestigungssystem (11, 11', 11"), das innerhalb der Basisfläche (2, 2', 2") des Luftfederkolbens (1, 1', 1") angeordnet ist; sowie
- einem Federträger (19), insbesondere einem Längslenker, mit dem die Basisfläche (2, 2', 2") des Luftfederkolbens (1, 1', 1") mittels des ersten Befestigungssystems (11, 11', 11") sowie eines zusätzlichen zweiten Befestigungssystems verankert ist;
wobei
- das Mehrkammersystem und das erste Befestigungssystem (11, 11', 11") so angeordnet sind, daß senkrecht zur Basisfläche (2, 2', 2") des Luftfederkolbens (1, 1', 1") maximal nur eine Spiegelebene- (X) vorhanden ist, und zwar in bezug auf die Kolbenmittenachse (S) bei Ausbildung einer exzentrischen Auflagefläche (20) des Luftfederkolbens als Teil der Basisfläche, wobei (ferner die Auflagefläche des Luftfederkolbens direkten Kontakt zum Federträger (19) hat;
**dadurch gekennzeichnet, daß**
- der Luftfederkolben (1, 1', 1") im unmittelbaren Bereich der Kolbenmittenachse (S) frei von einem zentralen Stützkörper ist;
- die Basisfläche (2, 2', 2") des Luftfederkolbens (1, 1', 1") einen durchgehenden und geradeverlaufenden Hauptsteg (9, 9') aufweist, der mit dem ringförmigen Außenrand (6, 6', 6") verbunden ist und dabei im mittigen Bereich der Basisfläche, jedoch nicht durch die Kolbenmittenachse (S), verläuft; sowie
- der Hauptsteg (9, 9') parallel zur Längsaußenkante (22) des Federträgers (19) verläuft, und zwar derart, daß sich der Hauptsteg innerhalb der Auflagefläche (20) des Luftfederkolbens (1, 1', 1") befindet, und zwar bei fluchtender Kantenanordnung von Hauptsteg und Federträger

2. Luftfederanordnung nach Anspruch 1, **dadurch gekennzeichnet, daß** der Luftfederkolben (1, 1', 1") aus glasfaserverstärktem Kunststoff besteht.

3. Luftfederanordnung nach einem der Ansprüche 1 oder 2, **dadurch gekennzeichnet, daß** die Basisfläche (2, 2', 2") des Luftfederkolbens wenigstens einen Befestigungssteg (10, 10'), insbesondere zwei Befestigungsstege, ausreichender Flächengröße für die Aufnahme des ersten Befestigungssystems (11, 11', 11") aufweist.

4. Luftfederanordnung nach Anspruche 3, **dadurch gekennzeichnet, daß** der Befestigungssteg (10, 10') den Außenrand (6, 6', 6") und Innenrand (7, 7', 7") der Ringkammer (5, 5', 5") verbindet.

5. Luftfederanordnung nach Anspruch 3 oder 4, **dadurch gekennzeichnet, daß** das erste Befestigungssystem (11, 11', 11") im Bereich des Innenrandes (7, 7', 7") der Ringkämmersegmente (5, 5', 5", A, B, C, D) angeornet ist.

6. Luftfederanordnung nach einem der Ansprüche 1 bis 5, **dadurch gekennzeichnet, daß** die Kernkammern (8, 8', 8") durch einen oder mehrere belastungs-, form- und gewichtsoptimierte Steg/e begrenzt ist/sind.

7. Luftfederanordnung nach Anspruch 6, **dadurch gekennzeichnet, daß** wenigstens ein Steg senkrecht zum Hauptsteg (9) verläuft, der insbesondere ausschließlich von Innenrand (7) zu Innenrand der Ringkammersegmente (5, A, B, C, D) verlauft.

8. Luftfederanordnung nach Anspruch 7, **dadurch gekennzeichnet, daß** vier Stege (12, 13) bei etwa gleichem Abstand zueinander senkrecht zum Hauptsteg (9) verlaufen, und zwar unter Bildung von zwei Außenstegen (12) und zwei Innenstegen (13).

9. Luftfederanordnung nach Anspruch 8, **dadurch gekennzeichnet, daß** die beiden Innenstege (13) durch wenigstens einen Quersteg (14), der parallel zum Hauptsteg verläuft, miteinander verbunden sind, und zwar unter Einkammerung der Kolbenmittenachse (S).

10. Luftfederanordnung nach Anspruch 3 oder 4 in Verbindung mit Anspruch 8, **dadurch gekennzeichnet, daß** die beiden Außenstege (12) jeweils in den Befestigungssteg (10) übergehen.

11. Luftfederanordnung nach Anspruch 8, **dadurch gekennzeichnet, daß** mehrere Stege schräg zum Hauptsteg (9') verlaufen, und zwar unter Bildung eines fächerförmigen Gebildes, die insbesondere ausschließlich von Innenrand (7') zu Innenrand der Ringkammersegmente (5', A, B, C, D) verlaufen.

12. Luftfederanordnung nach Anspruch 11, **dadurch gekennzeichnet, daß** vier fächerförmig verlaufende Stege (15, 16) vorhanden sind, und zwar unter Bildung von zwei Außenstegen (15) und zwei Innenstegen (16).

13. Luftfederanordnung nach Anspruch 11 oder 12, **dadurch gekennzeichnet, daß** die fächerförmig verlaufenden Stege (15, 16) im Bereich des Innenrandes (7') der Ringkammersegmente (5', A, B, C, D) in Form eines gemeinsamen Treffpunktes zusammenlaufen.

14. Luftfederanordnung nach Anspruch 13, **dadurch gekennzeichnet, daß** innerhalb des gemeinsamen Treffpunktes der fächerförmig verlaufenden Stege (15, 16) eine Kopfkammer (17) vorhanden ist, die nach außen durch den Innenrand (7') der Ringkammersegmente (5', A, B, C, D) begrenzt ist.

15. Luftfederanordnung nach Anspruch 3 oder 4 in Verbindung mit Anspruch 13 oder 15, **dadurch gekennzeichnet, daß** der gemeinsame Treffpunkt der fächerförmig verlaufenden Stege etwa auf halbem Weg zwischen zwei Befestigungsstegen (10') angeordnet ist.

16. Luftfederanordnung nach einem der Ansprüche 11 bis 15, **dadurch gekennzeichnet, daß** die fächerförmig verlaufenden Stege (15, 16) durch einen bogenförmig verlaufenden Steg (18) miteinander verbunden sind.

17. Luftfederanordnung nach Anspruch 16 in Verbindung mit Anspruch 7 oder 8, **dadurch gekennzeichnet, daß** der bogenförmig verlaufende Steg (18) von Befestigungssteg (10') zu Befestigungssteg verläuft und dabei im Bereich der beiden Außenstege (15) durch den Hauptsteg (9') verläuft.

18. Luftfederanordnung nach Anspruch 17, **dadurch gekennzeichnet, daß** der bogenförmig verlaufende Steg (18) im Bereich des Zusammentreffens von Hauptsteg (9') und Außensteg (15) jeweils eine Kreuzungsfläche aufweist.

19. Luftfederanordnung nach einem der Ansprüche 1 bis 18, **dadurch gekennzeichnet, daß** das erste Befestigungssystem (11, 11') wenigstens eine einfache Gewindebohrung, insbesondere zwei Gewindebohrungen, für die Aufnahme des zweiten Befestigungssystems umfaßt.

20. Luftfederanordnung nach einem der Ansprüche 1 bis 18, **dadurch gekennzeichnet, daß** das erste Befestigungssystem (11, 11') wenigstens eine Gewindebuchse, insbesondere zwei Gewindebuchsen, für die Aufnahme des zweiten Befestigungssystems umfaßt.

21. Luftfederanordnung nach Anspruch 20, **dadurch gekennzeichnet, daß** die Gewindebuchse elastisch und abgerundet ausgebildet ist.

22. Luftfederanordnung nach einem der Ansprüche 1 bis 18, **dadurch gekennzeichnet, daß** insbesondere bei Verwendung eines Luftfederkolbens (1") aus Kunststoff das erste Befestigungssystem (11") wenigstens eine Metalleinlage, insbesondere zwei Metalleinlagen, für die Aufnahme des zweiten Befestigungssystems umfaßt, wobei die Metalleinlage wiederum aus einem Gewindeteil (23) und einer Verstärkungsrippe (24) besteht.

23. Luftfederanordnung nach einem der Ansprüche 1 bis 22, **dadurch gekennzeichnet, daß** die Tiefe des Mehrkammersystems, insbesondere im Hinblick auf die Kernkammer/n (8, 8', 8") wenigstens 2/3 der Gesamthöhe (H) des Luftfederkolbens (1, 1', 1 ") beträgt.

## Claims

1. Air spring arrangement, consisting of at least the following components, namely:
- an air spring cover;
- an air spring piston (1, 1', 1") consisting in particular of plastic or aluminium and comprising
• an end surface (3, 3', 3") arranged facing the air spring cover;
• a lateral rolling surface (4, 4', 4") and
• a base surface (2, 2', 2") which is formed so that a multi-chamber system projects in to the interior of the air spring piston, the multi-chamber system comprising individual annular chamber segments (5, 5', 5", A, B, C, D) which extend over the entire circumference of the base surface and run inside the edge area of the base surface forming an annular outer edge (6, 6', 6") and inner edge (7, 7', 7"), and one or more core chambers (8, 8', 8") which are bounded by lands and are arranged inside the inner edge of the annular chamber segments;
- an air spring bellows made of elastomer material which connects the air spring cover and air spring piston (1, 1', 1") to one another using fastening means and is in particular provided with an embedded strength member, the air spring bellows being able to roll on the rolling surface (4, 4', 4") of the air spring piston, forming an air spring internal chamber of elastic volume;
- a first fastening system (11, 11', 11") which is arranged inside the base surface (2, 2', 2") of the air spring piston (1, 1', 1"); and
- a spring carrier (19), in particular a longitudinal arm, with which the base surface (2, 2', 2") of the air spring piston (1, 1', 1") is anchored by means of the first fastening system (11, 11', 11") and an additional second fastening system;
and in which the multi-chamber system and the first fastening system (11, 11;, 11") are arranged so that a maximum of just one mirror plane (X) is present perpendicular to the base surface (2, 2', 2") of the air spring piston (1, 1', 1"), in relation to the piston central axis (S) forming an eccentric supporting surface (20) of the air spring piston as part of the base surface, and the supporting surface of the air spring piston also is in direct contact with the spring carrier (19) ;
**characterised in that**
- the air spring piston (1, 1', 1") is free of a central supporting body in the immediate area of the piston central axis (S);
- the base surface (2, 2', 2") of the air spring piston (1, 1', 1") exhibits a continuous main land (9, 9') which runs in a straight line and is connected with the annular outer edge (6, 6', 6") and in the process runs in the central area of the base surface, but not through the piston central axis (S); and
- the main land (9, 9') runs parallel to the longitudinal outer edge (22) of the spring carrier (19), such that the main land is located inside the supporting surface (20) of the air spring piston (1, 1', 1"), with the edges of the main land and the spring carrier arranged aligned.

2. Air spring arrangement according to claim 1, **characterised in that** the air spring piston (1, 1', 1") is made of glass fibre-reinforced plastic.

3. Air spring arrangement according to one of claims 1 or 2, **characterised in that** the base surface (2, 2', 2") of the air spring piston exhibits at least one fastening land (10, 10'), in particular two fastening lands, of sufficient surface area for receiving the first fastening system (11, 11', 11").

4. Air spring arrangement according to claim 3, **characterised in that** the fastening land (10, 10') connects the outer edge (6, 6', 6") and inner edge (7, 7', 7") of the annular chamber (5, 5', 5").

5. Air spring arrangement according to claim 3 or 4, **characterised in that** the first fastening system (11, 11', 11") is arranged in the area of the inner edge (7, 7', 7") of the annular chamber segments (5, 5', 5", A, B, C, D).

6. Air spring arrangement according to one of claims 1 to 5, **characterised in that** the core chambers (8, 8', 8") are bounded by one or more lands which are optimised in loading, shape and weight.

7. Air spring arrangement according to claim 6, **characterised in that** at least one land runs perpendicularly to the main land (9) which in particular runs exclusively from inner edge (7) to inner edge of the annular chamber segments (5, A, B, C, D).

8. Air spring arrangement according to claim 7, **characterised in that** four lands (12, 13) with roughly equal spacing between one another run perpendicularly to the main land (9), forming two outer lands (12) and two inner lands (13).

9. Air spring arrangement according to claim 8, **characterised in that** the two inner lands (13) are connected to one another by at least one transverse land (14) which runs parallel to the main land, enclosing the piston central axis (S).

10. Air spring arrangement according to claim 3 or 4 in conjunction with claim 8, **characterised in that** the two outer lands (12) each run into the fastening land (10).

11. Air spring arrangement according to claim 8, **characterised in that** a plurality of lands run at an oblique angle to the main land (9'), forming a fan-shaped pattern which in particular runs exclusively from inner edge (7') to inner edge of the annular chamber segments (5', A, B, C, D).

12. Air spring arrangement according to claim 11, **characterised in that** four lands (15, 16) running in the shape of a fan are present, forming two outer lands (15) and two inner lands (16).

13. Air spring arrangement according to claim 11 or 12, **characterised in that** the lands (15, 16) running in the shape of a fan run together in the area of the inner edge (7') of the annular chamber segments (5', A, B, C, D) in the form of a common point of intersection.

14. Air spring arrangement according to claim 13, **characterised in that** a head chamber (17) is present inside the common point of intersection of the lands (15, 16) running in the shape of a fan and is bounded externally by the inner wall (7') of the annular chamber segments (5', A, B, C, D).

15. Air spring arrangement according to claim 3 or 4 in conjunction with claim 13 or 14, **characterised in that** the common point of intersection of the lands running in the shape of a fan is arranged roughly half-way between two fastening lands (10').

16. Air spring arrangement according to one of claims 11 to 15, **characterised in that** the lands (15, 16) running in the shape of a fan are connected to one another by a land (18) running in a curve.

17. Air spring arrangement according to claim 16 in conjunction with claim 3 or 4, **characterised in that** the land (18) running in a curve runs from fastening land (10') to fastening land and in the process runs through the main land (9') in the area of the two outer lands (15) .

18. Air spring arrangement according to claim 17, **characterised in that** the land (18) running in a curve in each case exhibits an intersecting surface in the area of the intersection of main land (9') and outer land (15).

19. Air spring arrangement according to one of claims 1 to 18, **characterised in that** the first fastening system (11, 11') comprises at least one simple threaded bore, in particular two threaded bores, for receiving the second fastening system.

20. Air spring arrangement according to one of claims 1 to 18, **characterised in that** the first fastening system (11, 11') comprises at least one threaded bush, in particular two threaded bushes, for receiving the second fastening system.

21. Air spring arrangement according to claim 20, **characterised in that** the threaded bush is elastic and rounded.

22. Air spring arrangement according to one of claims 1 to 18, **characterised in that** in particular when using an air spring piston (1") made of plastic, the first fastening system (11") comprises at least one metal inlay, in particular two metal inlays, for receiving the second fastening system, the metal inlay again consisting of a threaded part (23) and a stiffening rib (24).

23. Air spring arrangement according to one of claims 1 to 22, **characterised in that** the depth of the multi-chamber system, in particular viewing in the direction of the core chambers (8, 8', 8"), is at least two thirds of the total height (H) of the air spring piston (1, 1', 1").

## Revendications

1. Dispositif de suspension pneumatique, composé d'au moins les composants suivants, précisément :
- un couvercle de ressort pneumatique;
- un piston de ressort pneumatique (1, 1', 1 "), formé en particulier en matière synthétique ou en aluminium, comprenant.
• une face frontale (3, 3', 3"), disposée en regard du ressort pneumatique;
• une face de roulement latéral (4, 4', 4") et
• une face de base (2, 2', 2"), configurée de manière qu'un système à chambre multiple pénètre à l'intérieur du piston de ressort pneumatique, sachant que le système à chambre multiple comprend des segments de chambre annulaire (5, 5', 5", A, B, C, D) individuels, s'étendant sur la totalité de la périphérie de la face de base, qui s'étendent à l'intérieur de la zone de bordure de la face de base, en formant un bord extérieur (6, 6', 6") et un bord intérieur (7, 7', 7") en forme d'anneau, et une ou plusieurs chambres centrales (8, 8', 8") délimités par des nervures, disposée à l'intérieur du bord intérieur des segments de chambre annulaire;
- un soufflet de ressort pneumatique, réalisé en un matériau élastomère, reliant ensemble le couvercle de ressort pneumatique et le piston de ressort pneumatique (1, 1', 1") en utilisant des moyens de fixation et, en particulier, avec un support de résistance incorporé, le soufflet de ressort pneumatique pouvant rouler sur la face de roulement (4, 4', 4") du piston de ressort pneumatique, en formant un espace intérieur de ressort pneumatique dont le volume est élastique;
- un premier système de fixation (11, 11', 11"), disposé à l'intérieur de la face de base (2, 2', 2") du piston de ressort pneumatique (1, 1', 1"); ainsi qu'un support de ressort (19), en particulier un bras articulé longitudinal, à l'aide duquel la face de base (2, 2', 2") du piston de ressort pneumatique (1, 1', 1") est ancrée à l'aide du premier système de fixation (11, 11', 11"), ainsi que d'un deuxième système de fixation supplémentaire;
dans lequel
- le système à chambre multiple et le premier système de fixation (11, 11', 11") sont disposés de manière que, perpendiculairement à la face de base (2, 2', 2") du piston de ressort pneumatique (1, 1', 1"), il n'y ait au maximum qu'un seul plan de symétrie spéculaire (X) et précisément, en référence à l'axe central de piston (S), en cas de réalisation d'une face de pose (20) excentrique du piston de ressort pneumatique, en tant que partie de la face de base, sachant que, en outre, la face de pose du piston de ressort pneumatique est en contact direct avec le support de ressort (19),
**caractérisé en ce que**
- le piston de ressort pneumatique (1, 1', 1"), dans la zone immédiate de l'axe central de piston (S), est exempt de tout corps d'appui central;
- la face de base (2, 2', 2") du piston de ressort pneumatique (1, 1', 1") présente une nervure principale (9, 9'), continue et s'étendant suivant une allure rectiligne, reliée au bord extérieur en forme d'anneau (6, 6', 6") et s'étendant alors dans la zone centrale de la face de base, mais ne passant cependant pas par l'axe central de piston (S); et
- la nervure principale (9, 9') s'étend parallèlement à l'arête extérieure longitudinale (22) du support de ressort (19) et précisément de manière que la nervure principale se trouve à l'intérieur de la face de pose (20) du piston de ressort pneumatique (1, 1', 1"), et précisément dans le cas d'alignement de l'agencement des arêtes de la nervure principale et du support de ressort.

2. Dispositif de suspension pneumatique selon la revendication 1, **caractérisé en ce que** le piston de ressort pneumatique (1, 1', 1") est réalisé en matière synthétique renforcée par des fibres de verre.

3. Dispositif de suspension pneumatique selon l'une des revendications 1 ou 2, **caractérisé en ce que** la face de base (2, 2', 2") du piston de ressort pneumatique présente au moins une nervure de fixation (10, 10'), en particulier deux nervures de fixation, ayant une aire de surface suffisante pour supporter le premier système de fixation (11, 11', 11").

4. Dispositif de suspension pneumatique selon la revendication 3, **caractérisé en ce que** la nervure de fixation (10, 10') relie le bord extérieur (6, 6', 6") et me bord intérieur (7, 7', 7") de la chambre annulaire (5, 5', 5").

5. Dispositif de suspension pneumatique selon la revendication 3 ou 4, **caractérisé en ce que** le premier système de fixation (11, 11', 11") est disposé dans la zone du bord intérieur (7, 7', 7") dans segments de chambre annulaire (5, 5', 5', 5", A, B, C, D).

6. Dispositif de suspension pneumatique selon l'une des revendications 1 à 5, **caractérisé en ce que** la/les chambre(s) centrale(s) (8, 8', 8") est/sont délimitée(s) par une ou plusieurs nervures optimisées quant à la charge, la forme et le poids.

7. Dispositif de suspension pneumatique selon la revendication 6, **caractérisé en ce qu'**au moins une nervure s'étend perpendiculairement à une nervure principale (9), qui, en particulier s'étend exclusivement du bord intérieur (7) vers le bord intérieur des segments de chambre annulaire (5, 5', 5", A, B, C, D).

8. Dispositif de suspension pneumatique selon la revendication 7, **caractérisé en ce que** quatre nervures (12, 13) s'étendent, sous un espacement à peu près mutuel identique, perpendiculairement à la nervure principale (9), et, précisément, en formant deux nervures extérieures (12) et deux nervures intérieures (13).

9. Dispositif de suspension pneumatique selon la revendication 8, **caractérisé en ce que** les deux nervures intérieures (13) sont reliées ensemble par au moins une nervure transversale (14) s'étendant parallèlement à la nervure principale et, précisément, en enclosant l'axe central de piston (S).

10. Dispositif de suspension pneumatique selon la revendication 3 ou 4 en liaison avec la revendication 8, **caractérisé en ce que** les deux nervures extérieures (12) se transforment chacune en la nervure de fixation (10).

11. Dispositif de suspension pneumatique selon la revendication 8, **caractérisé en ce que** plusieurs nervures s'étendent obliquement par rapport à la nervure principale (9') et, précisément, en formant une structure en éventail, en s'étendant en particulier exclusivement depuis le bord intérieur (7') vers le bord intérieur des segments de chambre annulaire (5', A, B, C, D).

12. Dispositif de suspension pneumatique selon la revendication 11, **caractérisé en ce que** quatre nervures (15, 16), s'étendant en forme d'éventail, sont prévues et, précisément, en formant deux nervures extérieures (15) et deux nervures intérieures (16).

13. Dispositif de suspension pneumatique selon la revendication 11 ou 12, **caractérisé en ce que** les nervures (15, 16), s'étendant en forme d'éventail, se rejoignent dans la zone du bord intérieur (7') des segments de chambre annulaire (5', A, B, C, D), sous la forme d'un point de rencontre commun.

14. Dispositif de suspension pneumatique selon la revendication 13, **caractérisé en ce qu'**au point de rencontre commun des nervures (15, 16), s'étendant en forme d'éventail, est prévue une chambre de tête (17), délimitée vers l'extérieur par le bord intérieur (7') des segments de chambre annulaire (5', A, B, C, D).

15. Dispositif de suspension pneumatique selon la revendication 3 ou 4 en liaison avec la revendication 13 ou 14, **caractérisé en ce que** le point de rencontre commun des nervures, s'étendant en forme d'éventail, est disposé à peu près à mi-distance entre deux nervures de fixation (10').

16. Dispositif de suspension pneumatique selon l'une des revendications 11 à 15, **caractérisé en ce que** les nervures (15, 16), s'étendant en forme d'éventail, sont reliées ensemble par une nervure (18) s'étendant en forme d'arc.

17. Dispositif de suspension pneumatique selon la revendication 16, en liaison avec la revendication 7 ou 8, **caractérisé en ce que** la nervure (18) s'étendant en forme d'arc, s'étend de la nervure de fixation (10') à une nervure de fixation, est s'étend alors dans la zone des deux nervures extérieures (15), en passant par la nervure principale (9').

18. Dispositif de suspension pneumatique selon la revendication 17, **caractérisé en ce que** la nervure (18), s'étendant en forme d'arc, présente, dans la zone de la rencontre de la nervure principale (9') et de la nervure extérieure (15), chaque fois une surface de croisement.

19. Dispositif de suspension pneumatique selon la revendication 1 à 18, **caractérisé en ce que** le premier système de fixation (11, 11') comprend au moins un trou taraudé simple, en particulier deux trous taraudés, devant recevoir le deuxième système de fixation.

20. Dispositif de suspension pneumatique selon l'une des revendications 1 à 18, **caractérisé en ce que** le premier système de fixation (11, 11') comprend au moins une douille filetée, en particulier deux douilles filetées, devant recevoir le deuxième système de fixation.

21. Dispositif de suspension pneumatique selon la revendication 20, **caractérisé en ce que** la douille filetée est élastique et arrondie.

22. Dispositif de suspension pneumatique selon l'une des revendications 1 à 18, **caractérisé en ce que**, en particulier en cas d'utilisation d'un piston de ressort pneumatique (1") réalisé en matière synthétique, le premier système de fixation (11") présente au moins un insert métallique, en particulier deux inserts métalliques, devant supporter le deuxième système de fixation, sachant que l'insert métallique, à son tour, est formé d'une partie filetée (23) et d'une nervure de renforcement (24).

23. Dispositif de suspension pneumatique selon l'une des revendications 1 à 22, **caractérisé en ce que** la profondeur du système à chambre multiple, en particulier eu égard à la ou aux chambres centrales (8, 8', 8"), est au moins des 2/3 de la hauteur totale (H) du piston de ressort pneumatique (1, 1', 1").
